# EUROPEAN PATENT APPLICATION

(11) **EP 4 723 616 A1**
(43) Date of publication of application: **08.04.2026**
(21) Application number: 25206197.3
(22) Date of filing: 01.10.2025
(51) Int. Cl.: H04N 7/14

(54) **MODIFYING VISUAL REPRESENTATIONS OF MEDIA STREAMS IN VIRTUAL CONFERENCING PLATFORMS USING EMBEDDED SEMANTIC METADATA**

(30) Priority: 02.10.2024 US 202418904522
(71) Applicant: GOOGLE LLC, Mountain View CA 94043 (US)
(72) Inventor: SODHAN, Tejbir Singh, Mountain View, CA 94043 (US); BUCHANAN, Rosemary, Mountain View, CA 94043 (US); LILIENTHAL, Anders Nils Rickard, 111 22 Stockholm (SE); HELGASON, Karl Tristan, 8004 Zurich (CH); KIM, Eunyoung, Mountain View, CA 94043 (US); PENG, Kuan, Mountain View, CA 94043 (US); FAN, Shijie, Mountain View, CA 94043 (US); LOMBARDI, Nicholas, Mountain View, CA 94043 (US); LANTSEV, Aleksandr, Mountain View, CA 94043 (US); SUKHANOV, Sergey, Mountain View, CA 94043 (US)
(74) Representative: Chettle, John Edward

(57) **Abstract**

A virtual meeting user interface, UI (146), is presented during a virtual meeting between a plurality of participants. The UI comprises a plurality of regions each corresponding to a media stream provided by one of a plurality of client devices (140A - 140n). The plurality of regions comprises a region corresponding to one or more media streams provided to a client device (140A). The one or more media streams, each comprising respective metadata, are received at the client device. Respective metadata of a media stream indicates a spatial location in the media stream of a participant. One or more content presentation layout characteristics of the client device are identified. A visual representation of the media stream is caused to be modified in the region based at least on the location and the layout characteristics. The virtual meeting UI comprising the region with the modified visual representation is presented on the client device.

## Description

### TECHNICAL FIELD

Aspects and embodiments of the present disclosure relate to virtual conferencing, and in particular to modifying visual representations of media streams in virtual conferencing platforms using embedded semantic metadata.

### BACKGROUND

Virtual conferencing platforms can support a variety of client devices (e.g., capture devices and viewing devices) and various configurations of participants and devices. For example, a virtual conference can include one or more participants participating individually from mobile devices or web browsers as well as one or more conference rooms each hosting one or more participants. Each combination of capture devices and participants can result in media streams having unique patterns of participant position(s) and size(s), numbers of participants, or similar semantic information.

### SUMMARY

The below summary is a simplified summary of the disclosure in order to provide a basic understanding of some aspects of the disclosure. This summary is not an extensive overview of the disclosure. It is intended neither to identify key or critical elements of the disclosure, nor to delineate any scope of the particular implementations of the disclosure or any scope of the claims. Its sole purpose is to present some concepts of the disclosure in a simplified form as a prelude to the more detailed description that is presented later.

In an embodiment, a system and method are disclosed for modifying visual representations of media streams in virtual conferencing platforms using embedded semantic metadata. In an embodiment, a method includes presenting a virtual meeting user interface (UI) of a virtual meeting during a virtual meeting between a plurality of participants. The virtual meeting UI comprises a plurality of regions each corresponding to a media stream provided by one of a plurality of client devices of the plurality of participants. The plurality of regions comprising a first region corresponding to one or more first media streams provided to a first client device of the plurality of client devices. The method further includes receiving, at the first client device, the one or more first media streams each comprising respective semantic metadata. Respective semantic metadata of a first media stream of the one or more first media streams indicates a spatial location in the first media stream of a first participant of the plurality of participants. The method further includes identifying one or more content presentation layout characteristics of the first client device. The method further includes causing a visual representation of the first media stream to be modified in the first region based at least on the spatial location in the first media stream of the first participant and the one or more content presentation layout characteristics of the first client device. The method further includes presenting the virtual meeting UI comprising the first region with the modified visual representation of the first media stream on the first client device.

In an embodiment, the method further includes obtaining, at the first client device, a second media stream from a video sensor of the first client device. The method further includes identifying a second spatial location in the second media stream of a second participant of the plurality of participants. The method further includes modifying the second media stream to comprise second semantic metadata. The second semantic metadata indicates the second spatial location in the second media stream of the second participant. The method further includes providing the modified second media stream to one or more second client devices of the plurality of client devices. In an embodiment, identifying the second spatial location in the second media stream of the second participant includes providing the second media stream as input to an artificial intelligence (AI) model trained to identify virtual conference participants and respective spatial locations in media streams, and obtaining an output of the AI model comprising the second spatial location.

In an embodiment, the respective semantic metadata of the first media stream further indicates a second spatial location in the first media stream of a second participant of the plurality of participants. Causing the visual representation of the first media stream to be modified in the first region comprises splitting a frame of the first media stream into a first video sub-frame corresponding to the first participant and a second video sub-frame corresponding to the second participant. Presenting the virtual meeting UI comprising the first region with the modified visual representation of the first media stream on the first client device comprises presenting the first video sub-frame and the second video sub-frame on the first client device in the first region.

In an embodiment, the respective semantic metadata of the first media stream further indicates a size in the first media stream of the first participant.

In an embodiment, causing the visual representation of the first media stream to be modified in the first region comprises cropping the visual representation.

In an embodiment, the one or more content presentation layout characteristics of the first client device comprises at least one of: a screen size of the first client device, an aspect ratio of the first client device, a layout grid size of the first client device, or a media stream count.

In an embodiment, a computer-readable storage medium (which can be non-transitory computer-readable storage medium, although the disclosure is not limited to that) stores instructions which, when executed, cause a processing device to perform operations comprising a method according to any embodiment or aspect described herein.

In an embodiment, a system comprises: a memory; and a processing device operatively coupled with the memory to perform operations comprising a method according to any embodiment or aspect described herein.

### BRIEF DESCRIPTION OF DRAWINGS

Various embodiments in accordance with the present disclosure will be described with reference to the drawings, in which:
**FIG. 1** is a block diagram of an example system architecture for a virtual conferencing platform that modifies visual representations of media streams using embedded semantic metadata, in accordance with an embodiment;
**FIG. 2** is a block diagram of an example encoder-decoder architecture for a virtual conferencing platform that modifies visual representations of media streams using embedded semantic metadata, in accordance with an embodiment;
**FIGs. 3A-B** illustrate example graphical user interfaces presenting media stream visual representations before and after modification of the visual representations, in accordance with an embodiment;
**FIG. 4** is a sequence diagram of an example interaction between client devices and servers for modifying visual representations of media streams in virtual conferencing platforms using embedded semantic metadata, in accordance with an embodiment;
**FIGs. 5A-B** are a flow diagram of an example method for modifying visual representations of media streams in virtual conferencing platforms using embedded semantic metadata, in accordance with an embodiment; and
**FIG. 6** illustrates an example computer system, in accordance with at least one embodiment.

### DETAILED DESCRIPTION

### INTRODUCTION

Aspects and embodiments of the present disclosure relate to semantic content of media streams in virtual conferencing platforms. Virtual conferencing platforms can support a variety of client devices (e.g., capture devices and viewing devices) and various configurations of participants and devices. For example, a virtual conference can include one or more participants participating individually from mobile devices or web browsers as well as one or more conference rooms each hosting one or more participants. In another example, a virtual conference can include one or more automated participants (e.g., bots using artificial intelligence techniques). Each combination of capture devices and participants can result in media streams having unique patterns of participant position(s) and size(s), numbers of participants, or similar semantic information. It can be beneficial to modify media streams using cropping or other techniques to equalize how participants are displayed on viewing devices regardless of the configurations of the various participants and capture devices.

The above-described systems can face several challenges relating to efficiently identifying virtual conference participants in a media stream and displaying those virtual conference participants on client devices. Among these challenges are: (i) identifying semantic information of a media stream on viewing devices, and (ii) using a capture device or centralized server to modify media streams for optimal display on all viewing devices. These challenges are further described below.

First, identifying semantic information in a media stream can be computationally intensive for viewing devices. For example, object detection and segmentation artificial intelligence (AI) models can be used to identify individual participants and their respective locations in a media stream, but such AI models can consume significant computational resources on a frequent basis (e.g., frame by frame). For viewing devices, running inference on such AI models for each received media stream can be computationally infeasible. Furthermore, the sum of all viewing devices in a virtual conference each running inference on such AI models for the same media streams can lead to duplicative and unnecessary computation.

Second, modifying (e.g., cropping) media streams for optimal display on all viewing devices can be difficult for capture devices and/or virtual conferencing platform servers. For example, viewing devices can have different screen sizes, aspect ratios, layout grids, or other features, and thus each viewing device can have different optimal presentations of media streams and corresponding optimal media stream modifications. Performing these media stream modifications on a capture device or server device for all participating viewing devices can consume significant computational resources on the capture device or server device. Capture devices or server devices can thus be bottlenecks of the virtual conferencing platform and can lead to decreased bandwidth and increased latency for media streaming.

As a result of these challenges, virtual conferencing platform system and operational costs can be increased due to the increased computation, power, and other resources requirements resulting from the above inefficiencies. Furthermore, virtual conferencing platforms can experience decreased bandwidth and increased latency, which can negatively impact user experience.

Aspects of the present disclosure address the above challenges and other challenges by providing techniques for embedding semantic metadata in media streams for subsequent media stream modification. An example system can include one or more of the following components: (i) a capture device that identifies semantic information in a media stream and embeds the semantic information as semantic metadata, (ii) a viewing device that uses semantic metadata embedded in received media streams along with viewing device-specific characteristics to modify the media streams, and (iii) a viewing device that uses semantic metadata embedded in a received media stream to split the media stream into multiple media sub-streams. Some embodiments of these components are further described below.

In an embodiment, a capture device identifies semantic information in a media stream and embeds the semantic information as semantic metadata in the media stream to be delivered to viewing devices. For example, a conference room system can identify the locations and sizes (e.g., in pixels) of each participant captured in the conference room camera and embed the identified locations and sizes in the media stream metadata. The media stream with embedded semantic metadata can then be delivered to virtual conferencing platform servers and/or viewing devices for additional processing based on the semantic metadata.

In an embodiment, a viewing device uses semantic metadata embedded in received media streams along with viewing device-specific characteristics to modify visual representations of the media streams for presentation on the viewing device. For example, a mobile device can identify the location and size of a participant in a received media stream using semantic metadata embedded in the media stream. The mobile device can determine an optimal size for displaying a visual representation of the received media stream using factors such as the mobile device's screen size, the number of media streams to be presented on the mobile device, the type of grid layout currently active, and similar. The mobile device can then modify the visual representation of the media stream by cropping it to be centered on the participant's location and subsequently present the modified visual representation of the media stream on the screen.

In an embodiment, a viewing device uses semantic metadata embedded in a received media stream to split video frames of the media stream into multiple video sub-frames. For example, the viewing device can determine that two or more individual participants are present in the media stream (e.g., in a conference room) based on the semantic metadata indicating their respective locations and sizes. The viewing device can then split a frame of the media stream into two or more sub-frames each dedicated to a single respective participant and appropriately cropped to include the respective participant. The viewing device can then display the sub-frames individually on screen in place of the original frame.

Accordingly, virtual conferencing platforms using these techniques can have reduced system and operational costs due to improved distribution of computation between capture devices and viewing devices supported by semantic metadata embedded in media streams. Furthermore, virtual conferencing platforms can experience improved bandwidth and decreased latency as a result of these techniques.

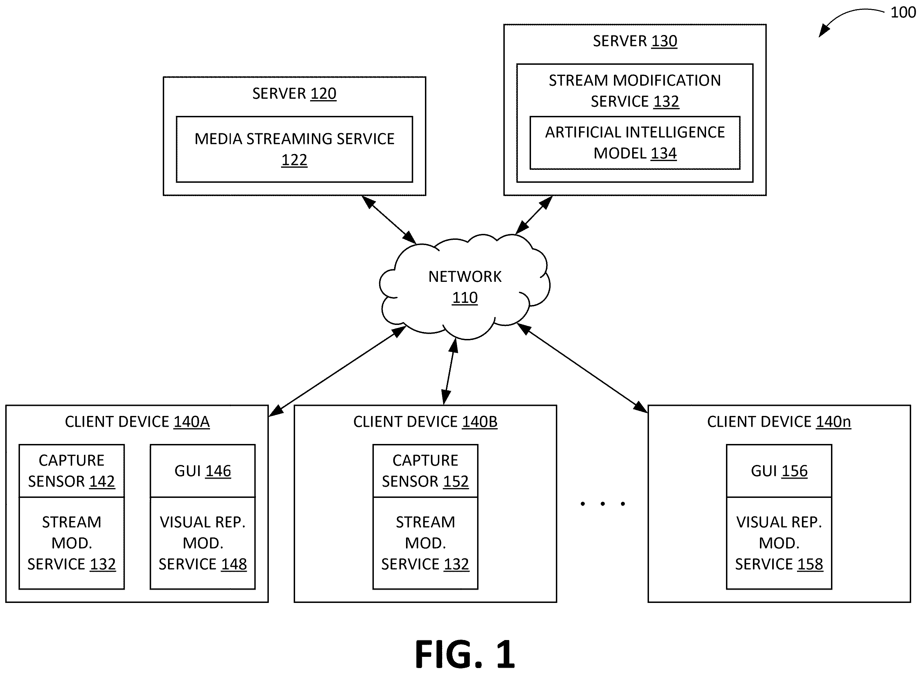

**FIG. 1** is a block diagram of an example system architecture **100** for a virtual conferencing platform that modifies visual representations of media streams using embedded semantic metadata, in accordance with an embodiment. System architecture **100** (also referred to as "system" or "virtual conferencing platform" herein) includes network **110,** servers **120-130,** and client devices **140A-n.** In various embodiments, system **100** can include more or fewer components in different configurations than those depicted in **FIG. 1****.** For example, system **100** can include additional servers, networks, etc. In another example, server **130** can be absent (e.g., media stream modification can be performed on client devices).

Network **110** can include a public network (e.g., the Internet), a private network (e.g., a LAN, a WAN, a VPN, an enterprise network), a wired network (e.g., Ethernet), a wireless network (e.g., an 802.11 Wi-Fi network), a cellular network (e.g., a 5G network), routers, hubs, switches, server computers, or a combination thereof. Network **110** or components thereof can be associated with different organizations in various embodiments. For example, components of network **110** can be associated with Internet Service Providers (ISPs), mobile or cellular carriers, cloud platform or software-as-a-service (SaaS) providers, private or public enterprises, private households or communities, etc. In an embodiment, network **110** (or a component thereof) can be a physical or virtual interconnect within a single device, such as a PCIe bus, a messaging system, or an API.

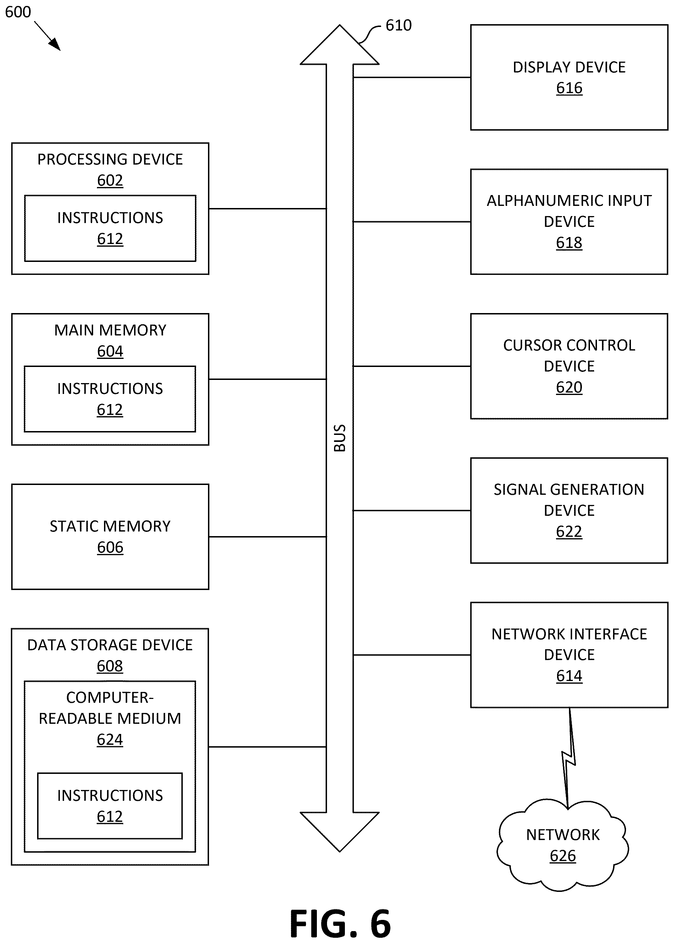

Each of servers **120-130** can be a rackmount server, a router computer, a personal computer, a portable digital assistant, a mobile phone, a laptop computer, a tablet computer, a netbook, a desktop computer, a virtual machine (VM), etc., or any combination of the above. The computer system of **FIG. 6** can be an example of a server. In various embodiments, each of servers **120-130** can be several computing devices, such as multiple rackmount servers in a data center(s) or multiple VMs in a cloud platform. In an embodiment, functions provided by servers **120-130** can alternatively be provided by a single server.

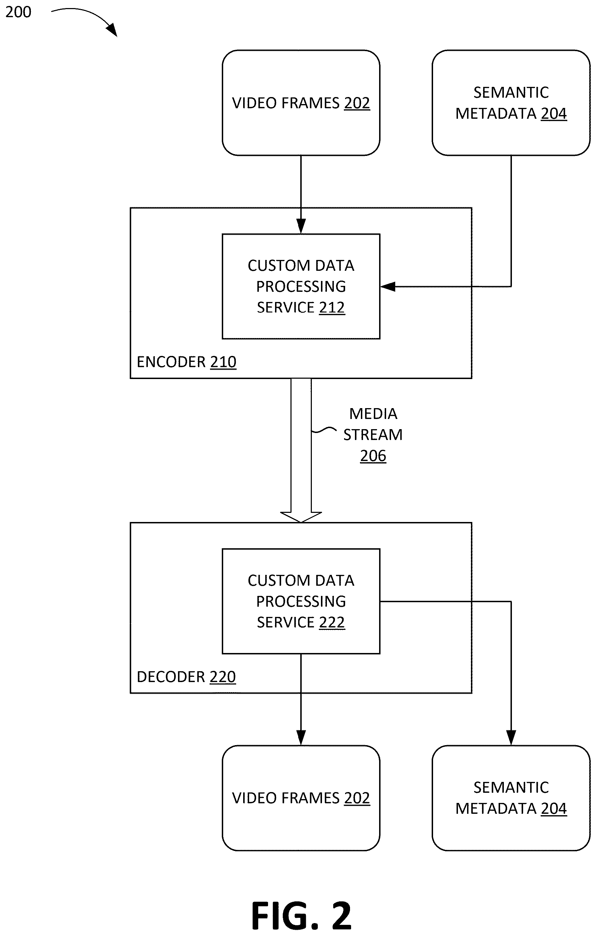

Server **120** includes media streaming service **122.** Media streaming service **122** can receive media streams from client devices in a virtual conference and distribute the media streams to other client devices in the virtual conference. Media streams can include multiple sub-streams or tracks, such as a video stream, an audio stream, a screen share stream, a metadata stream (e.g., semantic metadata), or similar. Media streams are further described with reference to **FIG. 2****.**

Server **130** includes stream modification service **132.** Stream modification service can modify a media stream to include semantic metadata describing video conference participants in the media stream (e.g., participants' locations, sizes, bounding boxes, etc.). Stream modification service can include one or more components to identify the semantic information to be included as semantic metadata. For example, stream modification service **132** includes artificial intelligence (AI) model **134,** which can be trained or configured to identify individual video conference participants, determine their bounding boxes, determine which participant(s) is speaking, or similar.

AI model **134** can refer to a model artifact that is created by a training engine using the training data that includes training inputs and/or corresponding target outputs (correct answers for respective training inputs). The training engine can find patterns in the training data that map the training input (e.g., media streams) to the target output (e.g., participants' locations, sizes, bounding boxes, etc.).

In some embodiments, AI model **134** may include one or more of artificial neural networks (ANNs), decision trees, random forests, support vector machines (SVMs), clustering-based models, Bayesian networks, or other types of machine learning models. ANNs generally include a feature representation component with a classifier or regression layers that map features to a target output space. The ANN can include multiple nodes ("neurons") arranged in one or more layers, and a neuron can be connected to one or more neurons via one or more edges ("synapses"). The synapses can perpetuate a signal from one neuron to another, and a weight, bias, or other configuration of a neuron or synapse can adjust a value of the signal. Training the ANN may include adjusting the weights or other features of the ANN based on an output produced by the ANN during training.

An ANN may include, for example, a convolutional neural network (CNN), recurrent neural network (RNN), or a deep neural network. A CNN, a specific type of ANN, hosts multiple layers of convolutional filters. Pooling is performed, and non-linearities can be addressed, at lower layers, on top of which a multi-layer perceptron is commonly appended, mapping top layer features extracted by the convolutional layers to decisions (e.g., classification outputs). A deep network may include an ANN with multiple hidden layers or a shallow network with zero or a few (e.g., 1-2) hidden layers. Deep learning is a class of machine learning algorithms that use a cascade of multiple layers of nonlinear processing units for feature extraction and transformation. Each successive layer uses the output from the previous layer as input. An RNN is a type of neural network that includes a memory to enable the neural network to capture temporal dependencies. An RNN is able to learn input-output mappings that depend on both a current input and past inputs. The RNN can address past and future measurements and make predictions based on this continuous measurement information. One type of RNN that may be used is a long short term memory (LSTM) neural network.

ANNs can learn in a supervised (e.g., classification) or unsupervised (e.g., pattern analysis) manner. Some ANNs (e.g., such as deep neural networks) may include a hierarchy of layers, where the different layers learn different levels of representations that correspond to different levels of abstraction. In deep learning, each level learns to transform its input data into a slightly more abstract and composite representation.

In some embodiments, AI model 134 can include at least one generative AI model, such as a large language model (LLM) allowing for the generation of new and original content. A generative AI model can deviate from a machine learning model based on the generative AI model's ability to generate new, original data, rather than making predictions based on existing data patterns. A generative AI model may include a generative adversarial network (GAN), a variational autoencoder (VAE), a large language model (LLM), or a diffusion model. In some instances, a generative AI model can employ a different approach to training or learning the underlying probability distribution of training data, compared to some machine learning models. For instance, a GAN can include a generator network and a discriminator network. The generator network attempts to produce synthetic data samples that are indistinguishable from real data, while the discriminator network seeks to correctly classify between real and fake samples. Through this iterative adversarial process, the generator network can gradually improve its ability to generate increasingly realistic and diverse data.

Generative AI models can also have the ability to capture and learn complex, high-dimensional structures of data. One aim of generative AI models is to model underlying data distribution, allowing them to generate new data points that possess the same characteristics as training data. Some machine learning models (e.g., that are not generative AI models) focus on optimizing specific prediction of tasks.

In some implementations, AI model **134** is an AI model that has been trained on a corpus of data. For example, AI model **134** can be an AI model that is first pre-trained on a corpus of data to create a foundational model, and afterwards fine-tuned on more data pertaining to a particular set of tasks to create a more task-specific, or targeted, model. The foundational model can first be pre-trained using a corpus of data that can include data in the public domain, licensed content, and/or proprietary content. Such a pre-training can be used by AI model **134** to learn broad elements including, image or speech recognition, general sentence structure, common phrases, vocabulary, natural language structure, and other elements. In some implementations, this first foundational model is trained using self-supervision, or unsupervised training on such datasets.

In some implementations, the second portion of training, including fine-tuning, includes unsupervised, supervised, reinforced, or any other type of training. In some implementations, this second portion of training includes some elements of supervision, including learning techniques incorporating human or machine-generated feedback, undergoing training according to a set of guidelines, or training on a previously labeled set of data, etc. In a non-limiting example associated with reinforcement learning, the outputs of AI model **134** while training can be ranked by a user, according to a variety of factors, including accuracy, helpfulness, veracity, acceptability, or any other metric useful in the fine-tuning portion of training. In this manner, AI model **134** can learn to favor these and any other factors relevant to users when generating a response.

In some implementations, AI model **134** includes one or more pre-trained models, or fine-tuned models. In a non-limiting example, in some implementations, the goal of the "fine-tuning" can be accomplished with a second, or third, or any number of additional models. For example, the outputs of the pre-trained model can be input into a second AI model that has been trained in a similar manner as the "fine-tuned" portion of training above. In such a way, two more AI models can accomplish work similar to one model that has been pre-trained, and then fine-tuned.

Client devices **140A-n** can be personal computers (PCs), laptops, notebook computers, mobile phones, smartphones, tablet computers, digital assistants, network-connected televisions (e.g., smart TVs), conference room hardware (e.g., cameras, microphones, speakers, etc.), or any other computing devices. The computer system of **FIG. 6** can be an example of a client device. In various embodiments, client devices **140A-n** can also be referred to as "user devices." Client devices **140A-n** can run an operating system (OS) that manages hardware and software of the client devices. Client devices **140A-n** can further include a web browser, application, or other software for displaying virtual conference user interfaces and interacting with servers **120-130.** Client devices **140A-n** can be used by users such as virtual conference participants. In general, and as described herein, functions described in embodiments as being performed by a virtual conferencing platform and/or server devices **120-130** can also or alternatively be performed on client devices **140A-n** in other embodiments. In addition, the functionality attributed to a particular component can be performed by different or multiple components operating together.

Client device **140A** can include capture sensor **142,** which can be one or more cameras, one or more microphones, other types of sensors, or combinations thereof. Capture sensor **142** can be used for capturing video and audio streams of one or more virtual conference participants. Client device **140A** can further include stream modification service **132** for modifying a media stream(s) of capture sensor **142** to include semantic metadata as described with reference to server **130.** Stream modification service **132** can use on-device machine learning models or other techniques for identifying participants in the media stream and generating corresponding semantic metadata. In an embodiment, stream modification service **132** can generate semantic metadata on a regular basis, such as on a frame-by-frame basis or every *n* frames. In an embodiment, stream modification service **132** can generate semantic metadata once, such as at the beginning of a stream. In an embodiment, stream modification service **132** can generate semantic metadata in response to one or more events, such as in response to an update request from a server or client device, in response to a participant entering or leaving the field of view of a media stream, in response to a participant starting or stopping speaking, or similar.

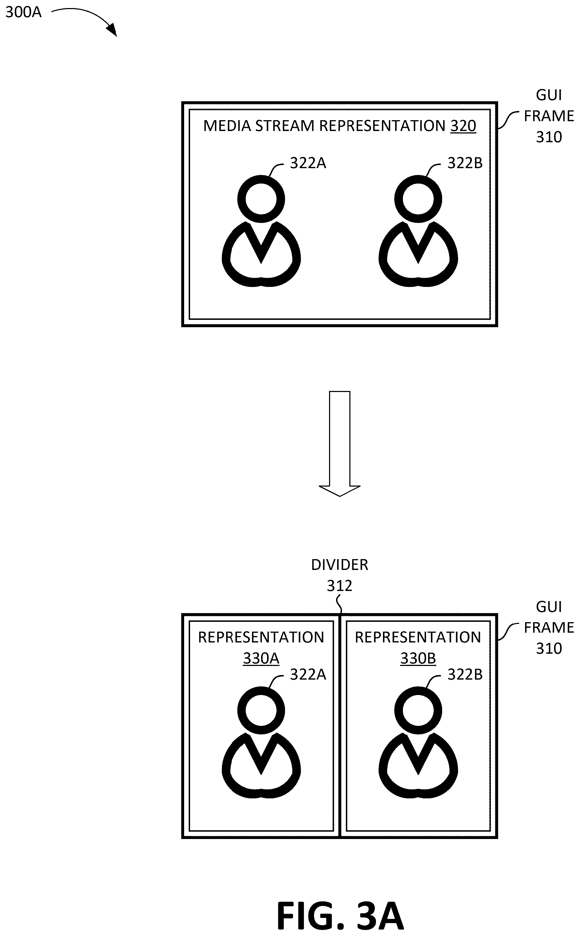

Client device **140A** can present GUI **146,** which can be a GUI of a virtual conferencing application, a web browser, or similar. GUI **146** can be used for displaying video streams of one or more virtual conference participants. GUI **146** can include a layout for displaying video streams such as a grid layout, a row layout, a column layout, a presenter layout, or similar. Client device **140A** can further include visual representation modification service **148,** for modifying a visual representation of a media stream based on semantic metadata embedded in the media stream. Visual representation modification service **148** can translate, rotate, crop, scale, split, or otherwise transform or modify visual representations of media streams based on the semantic metadata. Visual representation modification service **148** can perform modifications on a regular basis (e.g., a frame-by-frame basis), when updated semantic metadata is received, when a participant requests an update, or when similar cues are received. Example visual representation modifications are further described with reference to **FIGs. 3A-B**

In various embodiments, client devices can include subsets of the components depicted with reference to client device **140A.** For example, client device **140B** can be a conference room camera and can thus include capture sensor **152** and stream modification service **132.** In another example, client device **140n** can be a conference room TV and can thus include GUI **156** and visual representation modification service **158.**

**FIG. 2** is a block diagram of an example encoder-decoder architecture **200** for a virtual conferencing platform that modifies visual representations of media streams using embedded semantic metadata, in accordance with an embodiment. Encoder-decoder architecture **200** (also referred to as "system" or "codec" herein) can include encoder **210** and decoder **220** operating on video frames **202,** semantic metadata **204,** and media stream **206.** In various embodiments, system **200** can include more or fewer components in different configurations than those depicted in **FIG. 2****.** For example, system **100** can include additional processing for audio data.

Encoder **210** can include custom data processing service **212** for adding custom data processing operations in the encoding of video frames **202** into media stream **206.** Custom data processing service **212** can be configured or otherwise programmed to embed semantic metadata **204** in media stream **206** along with video frames **202.** For example, semantic metadata can be attached to a respective video frame and transferred over a network together with the video frame to provide synchronized delivery of the metadata and video frame. In an embodiment, semantic metadata **204** can be embedded into RTP (RFC-3550) payloads of video frames **202** that constitute media stream **206.** In an embodiment, encoder **210** can be included in stream modification service **132** of server **130** and/or client devices **140A-n** of **FIG.** 1.

Similarly, decoder **220** can include custom data processing service **222** for adding custom data processing operations in the decoding of video frames **202** from media stream **206.** Custom data processing service **222** can be configured or otherwise programmed to extract semantic metadata **204** from media stream **206** along with video frames **202.** In an embodiment, decoder **220** can be included in stream modification service **132** of server **130** and/or visual representation modification services **148-158** of **FIG. 1****.** For example, stream modification service **132** of server **130** can receive a media stream from client device **140B,** decode the media stream using decoder **220,** add metadata (or additional metadata) using encoder **210,** and provide the media stream to client device **140A.**

In an embodiment, custom data processing services **212-222** correspond to an application programming interface (API), such as the WebRTC Insertable Streams API. For example, custom data processing services **212-222** can be provided by a web browser and configured or otherwise programmed to embed or extract semantic metadata from a WebRTC MediaStreamTrack using the WebRTC Insertable Streams API.

**FIGs. 3A-B** illustrate example graphical user interfaces **300A-B** presenting media stream visual representations before and after modification of the visual representations, in accordance with an embodiment. **FIGs. 3A-B** depict GUI frame **310** before modification. GUI frame **310** includes media stream visual representation **320,** which can correspond to a media stream including embedded semantic metadata. GUI frame **310** can be one of multiple GUI frames (e.g., in a grid) each including a respective media stream visual representation. Media stream visual representation **320** includes video conference participants **322A-B,** which can each correspond to semantic metadata representing their respective positions, sizes, bounding boxes, etc. within the video frame.

In an embodiment, as depicted in **FIG. 3A****,** a visual representation of a media stream can be modified by splitting it into two or more visual representations occupying the same space in the graphical user interface. For example, media stream visual representation **320** can be split into media stream visual representations **330A-B,** which occupy the same GUI frame **310.** GUI frame **310** can include one or more dividers (e.g., divider **312**) to separate the visual representations. As described herein, media stream visual representations **330A-B** can be derived from media stream visual representation **320** by splitting, scaling, translating, cropping, rotating, or otherwise transforming or modifying video frames of the media stream to generate video sub-frames associated with media stream visual representations **330A-B.**

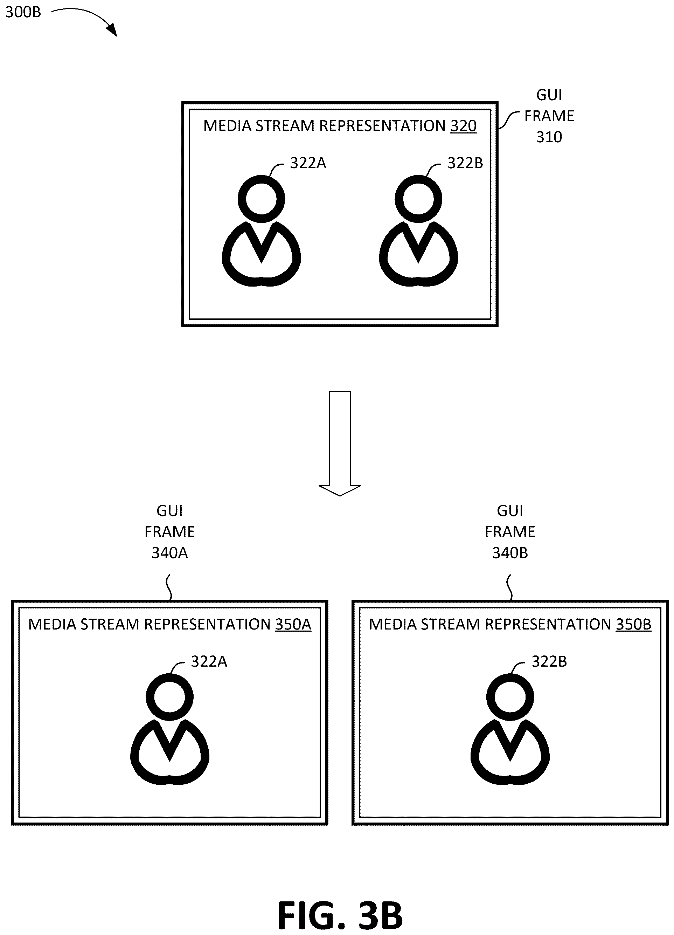

In an embodiment, as depicted in **FIG. 3B****,** a visual representation of a media stream can be modified by splitting it into two or more visual representations each occupying separate spaces in the graphical user interface. For example, media stream visual representation **320** can be split into media stream visual representations **350A-B,** which each occupy respective GUI frames **340A-B** that are equivalent or analogous to GUI frame **310.** GUI frames **340A-B** can be positioned in a row, column, grid, or other layout along with other GUI frames for other media streams.

In various embodiments, combinations of modifications and presentations of media stream visual representations depicted in **FIGs. 3A-B** can be used. For example, media stream visual representations **350A-B** can be derived from media stream visual representations **330A-B** in a multi-step splitting process of an embodiment. In various embodiments, other types of modifications and presentations of media stream visual representations not depicted in **FIGs. 3A-B** can be used.

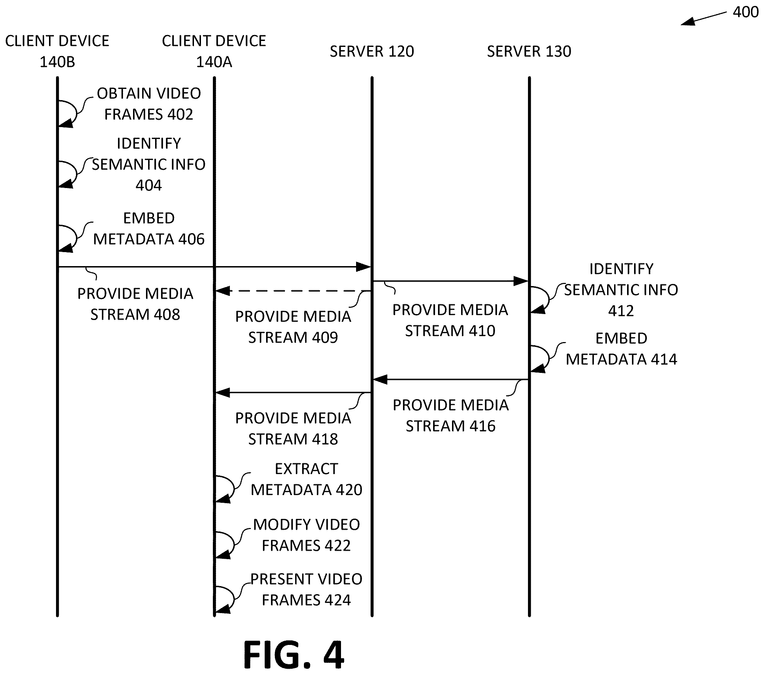

**FIG. 4** is a sequence diagram of an example interaction **400** between client devices **140A-B** and servers **120-130** for modifying visual representations of media streams in virtual conferencing platforms using embedded semantic metadata, in accordance with an embodiment. In some embodiments, operations depicted in **FIG. 4** could occur in a different order or be performed by different components than depicted. Various embodiments can include additional operations or components not depicted in **FIG. 4** or a subset of operations or components depicted in **FIG. 4****.** The operations depicted in **FIG. 4** can correspond to different communication sessions or different timing intervals. For example, some operations can proceed in immediate succession or can be part of a single communication session, while other operations can be spread out over time or can be part of different communication sessions.

At operation **402,** client device **140B** obtains video frames from one or more capture sensors, such as capture sensor **152** of **FIG. 1****.** At operation **404,** client device **140B** identifies semantic information in the obtained video frames, e.g., by using an AI model or other technique provided by stream modification service **132.** At operation **406,** client device **140B** embeds the semantic information as metadata in a media stream, e.g., by using stream modification service **132** and/or encoder **210.**

At operation **408,** client device **140B** provides the media stream with embedded semantic metadata to media streaming service **122** of server **120.** In an embodiment, server **120** provides the media stream to client device **140A** at operation **409** without additional server-side processing of the embedded metadata (e.g., operations proceed at operation **420**). In an embodiment, server **120** provides the media stream to stream modification service **132** of server **130** at operation **410** for additional metadata processing.

At operation **412,** server **130** identifies semantic information in the obtained video frames, e.g., by using an AI model or other technique provided by stream modification service **132.** At operation **414,** server **130** embeds the semantic information as additional metadata in the media stream, e.g., by using stream modification service **132** and/or encoder **210.** Prior to embedding the semantic information as metadata in the media stream, server **130** can first decode the media stream using decoder **220** and re-encode the media stream after adding the additional metadata. In an embodiment, server **130** can additionally or alternatively modify the semantic metadata embedded at operation **406** by client device **140B.** Prior to modifying the metadata, server **130** can first decode the media stream using decoder **220** and re-encode the media stream after modifying the metadata.

At operation **416,** server **130** provides the media stream with additional embedded semantic metadata to server **120.** At operation **418,** server **120** provides the media stream to client device **140A.**

At operation **420,** client device **140A** extracts the semantic metadata from the media stream, e.g., by using visual representation modification service **148** and/or decoder **220.** At operation **422,** client device **140A** modifies video frames of the media stream using, e.g., visual representation modification service **148.** Modifications can include cropping, translating, rotating, etc. as previously described. Modifications can be based on the metadata and/or characteristics of client device **140A,** such as screen size, active layout, number of media streams to be presented, etc At operation **424,** client device **140A** presents video frames of the media stream, e.g., using visual representation techniques described with reference to **FIG. 3A-****B.**

In an embodiment, operations **402-424** can be repeated on a periodic basis, such as frame-by-frame or at a regular multi-frame interval. In an embodiment, operations **402-424** can occur once at the beginning of a stream. In an embodiment, operations **402-424** can occur in response to a trigger, such as a user interaction on one of client devices **140A-B,** a participant entering or leaving the field of view of a capture device, a participant starting or stopping speaking, or similar.

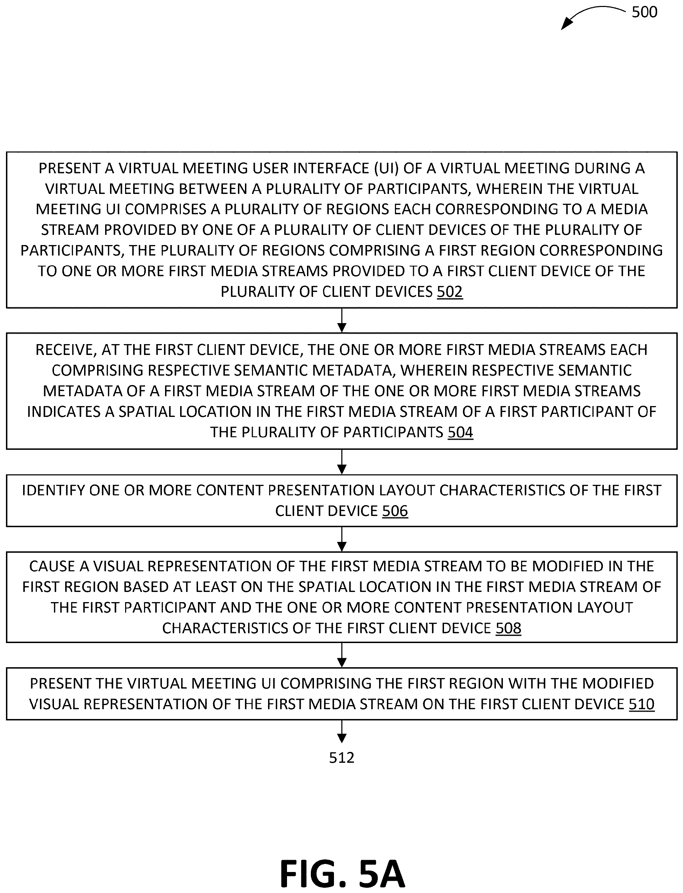

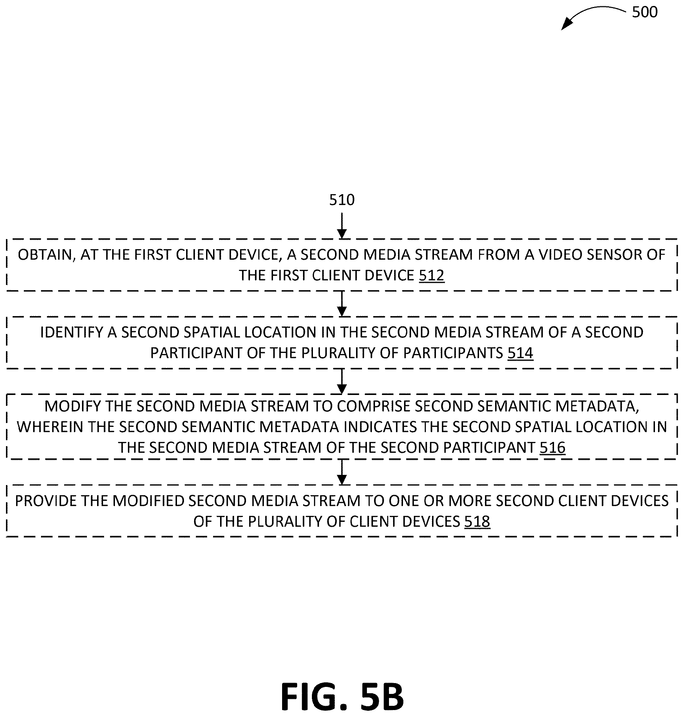

**FIGs. 5A-B** are a flow diagram of an example method **500** for modifying visual representations of media streams in virtual conferencing platforms using embedded semantic metadata, in accordance with an embodiment. Method **500** can be performed by processing logic that can comprise hardware (e.g., circuitry, dedicated logic, etc.), computer-readable instructions such as software or firmware (e.g., run on a general-purpose computing system or a dedicated machine), or a combination thereof. For instance, an example system can include a memory and a processing device coupled to the memory device to perform operations comprising the blocks of method **500.** Method **500** can also be associated with a set of instructions stored on a non-transitory computer-readable medium (e.g., magnetic or optical disk, etc.). The instructions, when executed by a processing device, can cause the processing device to perform operations comprising the blocks of method **500.** In at least one embodiment, method **500** is performed by one or more of servers **120-130** or client devices **140A-n** of **FIG. 1****,** or components thereof. In at least one embodiment, method **500** is performed by computing system **600** of **FIG. 6****.** In some embodiments, blocks depicted in **FIG. 5** could be performed simultaneously or in a different order than depicted. Various embodiments can include additional blocks not depicted in **FIGs. 5A-B** or a subset of blocks depicted in **FIGs. 5A-B** . For example, blocks depicted with a dashed outline (e.g., blocks **512-518)** can be absent in an embodiment.

At block **502,** processing logic presents a virtual meeting user interface (UI) of a virtual meeting during a virtual meeting between a plurality of participants, wherein the virtual meeting UI comprises a plurality of regions each corresponding to a video stream provided by one of a plurality of client devices of the plurality of participants, the plurality of regions comprising a first region corresponding to one or more first video streams provided to a first client device of the plurality of client devices. A region of the virtual meeting UI can correspond to one or more of GUI frames **310 or 340A-B** of **FIG. 3****,** and the video streams can be associated with the corresponding media stream representations. The plurality of participants can include participants **322A-B.** The client device can correspond to one of client devices **140A-n** of **FIG. 1****.**

At block **504,** the processing logic receives, at the first client device, the one or more first video streams each comprising respective semantic metadata, wherein respective semantic metadata of a first video stream of the one or more first video streams indicates a spatial location in the first video stream of a first participant of the plurality of participants. The semantic metadata can be metadata **204** of **FIG. 2****.** As previously described, the metadata can indicate various characteristics of video conference participants, such as spatial location in the video frame, spatial size in the video stream, bounding box, direction of motion, whether a participant is speaking, etc.

At block **506,** the processing logic identifies one or more content presentation layout characteristics of the first client device. In an embodiment, the one or more content presentation layout characteristics of the first client device comprises at least one of: a screen size of the first client device, an aspect ratio of the first client device, a layout grid size of the first client device, or a video stream count.

At block **508,** the processing logic causes a visual representation of the first video stream to be modified in the first region based at least on the spatial location in the first video stream of the first participant and the one or more content presentation layout characteristics of the first client device. In an embodiment, causing the visual representation of the first video stream to be modified in the first region comprises cropping, translating, rotating, scaling, splitting, or otherwise transforming the visual representation.

At block **510,** the processing logic presents the virtual meeting UI comprising the first region with the modified visual representation of the first video stream on the first client device (e.g., as depicted in **FIGs. 3A-B** ).

In an embodiment, the respective semantic metadata of the first video stream further indicates a second spatial location in the first video stream of a second participant of the plurality of participants. Causing the visual representation of the first video stream to be modified in the first region can comprise splitting a frame of the first video stream into a first video sub-frame corresponding to the first participant and a second video sub-frame corresponding to the second participant. Presenting the virtual meeting UI comprising the first region with the modified visual representation of the first video stream on the first client device can comprise presenting the first video sub-frame and the second video sub-frame on the first client device in the first region (e.g., as depicted in **FIG. 3A**).

At block **512,** the processing logic obtains, at the first client device, a second video stream from a video sensor of the first client device. The video sensor can be capture sensor **142** or **152,** for example.

At block **514,** the processing logic identifies a second spatial location in the second video stream of a second participant of the plurality of participants. In an embodiment, identifying the second spatial location in the second video stream of the second participant comprises providing the second video stream as input to an artificial intelligence (AI) model trained to identify video conference participants and respective spatial locations in video streams, and obtaining an output of the AI model comprising the second spatial location. The AI model can be AI model **134,** for example.

At block **516,** the processing logic modifies the second video stream to comprise second semantic metadata, wherein the second semantic metadata indicates the second spatial location in the second video stream of the second participant.

At block **518,** the processing logic provides the modified second video stream to one or more second client devices of the plurality of client devices.

**FIG. 6** is a block diagram illustrating an example computer system **600,** in accordance with embodiments of the present disclosure. Computer system **600** can correspond to server machines **110-140** or client devices **150A-n,** as described with reference to **FIG. 1****.** Computer system **600** can operate in the capacity of a server or an endpoint machine in endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

Computer system **600** includes processing device **602** (e.g., one or more processors or cores), main memory **604** (e.g., read-only memory (ROM), flash memory, dynamic random access memory (DRAM) such as synchronous DRAM (SDRAM), double data rate (DDR SDRAM), or DRAM (RDRAM), etc.), static memory **606** (e.g., flash memory, static random access memory (SRAM), etc.), and data storage device **608,** which communicate with each other via bus **610.**

Processing device **602** represents one or more general-purpose processing devices such as a microprocessor, central processing unit, or the like. More particularly, processing device **602** can be a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device **602** can also be one or more special-purpose processing devices such as an application specific integrated circuit (ASIC), a field programmable gate array (FPGA), a digital signal processor (DSP), network processor, or the like. Processing device **602** is configured to execute instructions **612** (e.g., for generating customized lyric captions using machine learning models) for performing the operations discussed herein.

Computer system **600** can further include network interface device **614.** Computer system **600** also can include display device **616** (e.g., a liquid crystal display (LCD) or a cathode ray tube (CRT)), alphanumeric input device **618** (e.g., a keyboard, and alphanumeric keyboard, a motion sensing input device, touch screen), cursor control device **620** (e.g., a mouse), and signal generation device **622** (e.g., a speaker). In some embodiments, computer system **600** may not include display device **616,** alphanumeric input device **618,** and/or cursor control device **620** (e.g., in a headless configuration).

Data storage device **608** can include a non-transitory machine-readable storage medium **624** (also computer-readable storage medium) on which is stored one or more sets of instructions **612** (e.g., for generating customized lyric captions using machine learning models) embodying any one or more of the methodologies or functions described herein. Instructions **612** can also reside, completely or at least partially, within main memory **604** or within the processing device **602** during execution thereof by computer system **600,** main memory **604** and processing device **602** also constituting machine-readable storage media. Instructions **612** can further be transmitted or received over network **626** via network interface device **614.**

In one implementation, instructions **612** include instructions for generating customized lyric captions using machine learning models, as described herein. While computer-readable storage medium **624** (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," "one embodiment," "an implementation," or "an embodiment," means that a particular feature, structure, or characteristic described in connection with the implementation and/or embodiment is included in at least one implementation and/or embodiment. Thus, the appearances of the phrase "in one implementation," or "in an implementation," in various places throughout this specification can, but are not necessarily, referring to the same implementation, depending on the circumstances. Furthermore, the particular features, structures, or characteristics can be combined in any suitable manner in one or more implementations.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interact between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Finally, implementations described herein include collection of data describing a user and/or activities of a user. In one implementation, such data is only collected upon the user providing consent to the collection of this data. In some implementations, a user is prompted to explicitly allow data collection. Further, the user can opt-in or opt-out of participating in such data collection activities. In one implementation, the collect data is anonymized prior to performing any analysis to obtain any statistical patterns so that the identity of the user cannot be determined from the collected data.

## Claims

1. A method comprising:
presenting a virtual meeting user interface (UI) of a virtual meeting during a virtual meeting between a plurality of participants, wherein the virtual meeting UI comprises a plurality of regions each corresponding to a media stream provided by one of a plurality of client devices of the plurality of participants, the plurality of regions comprising a first region corresponding to one or more first media streams provided to a first client device of the plurality of client devices;
receiving, at the first client device, the one or more first media streams each comprising respective semantic metadata, wherein respective semantic metadata of a first media stream of the one or more first media streams indicates a spatial location in the first media stream of a first participant of the plurality of participants;
identifying one or more content presentation layout characteristics of the first client device;
causing a visual representation of the first media stream to be modified in the first region based at least on the spatial location in the first media stream of the first participant and the one or more content presentation layout characteristics of the first client device; and
presenting the virtual meeting UI comprising the first region with the modified visual representation of the first media stream on the first client device.

2. The method of claim 1, further comprising:
obtaining, at the first client device, a second media stream from a video sensor of the first client device;
identifying a second spatial location in the second media stream of a second participant of the plurality of participants;
modifying the second media stream to comprise second semantic metadata, wherein the second semantic metadata indicates the second spatial location in the second media stream of the second participant; and
providing the modified second media stream to one or more second client devices of the plurality of client devices.

3. The method of claim 2, wherein identifying the second spatial location in the second media stream of the second participant comprises:
providing the second media stream as input to an artificial intelligence (AI) model trained to identify virtual conference participants and respective spatial locations in media streams; and
obtaining an output of the AI model comprising the second spatial location.

4. The method of any of claims 1-3, wherein:
the respective semantic metadata of the first media stream further indicates a second spatial location in the first media stream of a second participant of the plurality of participants;
causing the visual representation of the first media stream to be modified in the first region comprises splitting a frame of the first media stream into a first video sub-frame corresponding to the first participant and a second video sub-frame corresponding to the second participant; and
presenting the virtual meeting UI comprising the first region with the modified visual representation of the first media stream on the first client device comprises presenting the first video sub-frame and the second video sub-frame on the first client device in the first region.

5. The method of any of claims 1-4, wherein the respective semantic metadata of the first media stream further indicates a size in the first media stream of the first participant.

6. The method of any of claims 1-5, wherein causing the visual representation of the first media stream to be modified in the first region comprises cropping the visual representation.

7. The method of any of claims 1-6, wherein the one or more content presentation layout characteristics of the first client device comprises at least one of: a screen size of the first client device, an aspect ratio of the first client device, a layout grid size of the first client device, or a media stream count.

8. A system comprising:
a memory device; and
a processing device coupled to the memory device, the processing device to perform operations comprising the method of any of claims 1-7.

9. A non-transitory computer-readable medium comprising instructions that, when executed by a processing device, cause the processing device to perform operations comprising the method of any of claims 1-7.

10. A computer program product comprising instructions that, when executed by a processing device, cause the processing device to perform operations comprising the method of any of claims 1-7.

11. Computer program instructions that, when executed by a processing device, cause the processing device to perform operations comprising the method of any of claims 1-7
